# EUROPÄISCHE PATENTSCHRIFT

(11) **EP 3 127 396 B1**
(45) Veröffentlichungstag und Bekanntmachung des Hinweises auf die Patenterteilung: **28.07.2021**
(21) Anmeldenummer: 15703962.9
(22) Anmeldetag: 05.02.2015
(51) Int. Cl.: H04W 76/34, H04W 76/16, H04W 88/06

(54) **VERFAHREN ZUR RESSOURCEN-VERWALTUNG IN EINER FAHRZEUGBASIERTEN MOBILFUNKEINRICHTUNG**
METHOD FOR RESOURCE MANAGEMENT IN A VEHICLE-BASED MOBILE COMMUNICATIONS UNIT
PROCÉDÉ POUR L'ADMINISTRATION DES RESSOURCES DANS UN DISPOSITIF DE TÉLÉPHONIE MOBILE BASÉ SUR VÉHICULE

(30) Priorität: 03.04.2014 DE 102014206393
(43) Veröffentlichungstag der Anmeldung: 08.02.2017
(73) Patentinhaber: Bayerische Motoren Werke Aktiengesellschaft, 80809 München (DE)
(72) Erfinder: FERTL, Peter, 80799 München (DE); KRAUSS, Thomas, 81373 München (DE); KAINDL, Markus, 85579 Neubiberg (DE)
(86) Internationale Anmeldenummer: PCT/EP2015/052413
(87) Internationale Veröffentlichungsnummer: WO 2015/149974

(56) Entgegenhaltungen:
- EP-A2- 0 899 890
- GB-A- 2 495 985
- US-A1- 2013 012 135
- US-A1- 2013 329 639
- None

## Beschreibung

### Gebiet der Erfindung

Die Erfindung bezieht sich auf ein Verfahren zur Ressourcen-Verwaltung in einer fahrzeugbasierten Mobilfunkeinrichtung, in deren Speicher eine Mehrzahl aktivierbarer Identitätsprofile, jeweils umfassend einen Nutzer-spezifischen und einen Nutzer-unspezifischen Datenanteil, hinterlegt sind und die eine Modemeinrichtung aufweist, mittels derer unter Verwendung je eines Identitätsprofils zwei simultane Mobilfunk-Kommunikationskanäle zu Mobilfunk-Netzen von zur Bereitstellung von Mobilfunk-Diensten in Anspruch nehmbaren Mobilfunk-Dienstanbietern etablierbar sind, wobei die Durchführung des Verfahrens automatisiert von einer Steuereinheit der Mobilfunkeinrichtung durchgeführt wird.

### Stand der Technik

Derartige Verfahren sind bekannt aus der WO 2011/104580 A1.

Diese Druckschrift offenbart eine in einem Kraftfahrzeug integrierte Mobilfunkeinrichtung, mit der simultan zwei Mobilfunk-Kommunikationskanäle sowie zusätzlich eine Satellitenkommunikation zu einem Satellitennavigationssystem etablierbar sind. Zur Etablierung mehrerer simultaner Mobilfunk-Kommunikationskanäle weist die bekannte Mobilfunkeinrichtung eine entsprechende Modemeinrichtung auf. Diese kann mehrere Einzelmodems umfassen, mittels derer jeweils ein Mobilfunk-Kanal etablierbar ist. Alternativ kann die Modemeinrichtung auch ein Mehrkanalmodem aufweisen, mittels dessen simultan mehrere Mobilfunk-Kanäle etablierbar sind. Man spricht hier beispielsweise von Dual- oder Multiple-Modem-Anlagen.

Die Modemeinrichtung steht mit äußeren Antennen des Kraftfahrzeugs in Verbindung, über die in einem vorgegebenen Frequenzband die unterschiedlichen Kommunikationskanäle zu Mobilfunk-Netzen von Mobilfunk-Dienstanbietern etabliert werden. Die Etablierung eines Mobilfunk-Kommunikationskanals erfolgt jeweils durch Aktivierung eines Identitätsprofils, von denen mehrere in einem Speicher der Mobilfunkeinrichtung gespeichert sind. Beispielsweise werden solche Identitätsprofile in einer oder mehreren "Subscriber Identity Moduls", SIMs, insbesondere in Form sogenannter SIM-Karten, hinterlegt. Wesentlicher Bestandteil eines SIM ist das auch als IMSI bekannte Identitätsprofil, welches typischerweise einen Länder-spezifischen Datenanteil (MCC), einen Netzwerk-spezifischen Datenanteil (MNC) und einen Nutzer-spezifischen Datenanteil umfasst. Ein etablierter Kommunikationskanal definiert sich über das jeweils für ihn aktivierte Identitätsprofil, das beispielsweise standortspezifisch ausgewählt werden kann. Die Zusammenstellung vorgespeicherter Identitätsprofile gibt vor, in welchen Ländern ein bestimmter Benutzer gemäß seinen im Vorfeld abgeschlossenen Mobilfunk-Verträgen auf welche Dienste welcher Dienstanbieter zugreifen kann.

Bei dem bekannten Verfahren wird die Möglichkeit zum Aufbau mehrerer simultaner Mobilfunk-Kommunikationskanäle genutzt, um möglichst viele und präzise Zusatzinformationen zu erhalten, mit denen die über die Satellitennavigations-Schnittstelle empfangenen Satellitendaten besonders schnell und präzise in aktuelle Positionsinformationen des Kraftfahrzeugs umgesetzt und eine möglichst günstige Route berechnet werden können.

Derartige Zusatzinformationen sowie andere, Fahrzeug-spezifische Informationen werden häufig als Mobilfunk-Dienste des Fahrzeugherstellers bzw. von Mobilfunk-Dienstanbietern im Auftrag des Fahrzeugherstellers geliefert.

Unabhängig davon können auch Benutzer des Fahrzeugs ein Interesse an der Etablierung eines eigenen Mobilfunk-Kommunikationskanals haben, beispielsweise um individuelle Mobilfunk-Dienste wie Telefonie oder mobilen Internetzugang, zu nutzen. Beispielsweise kann eine fahrzeugbasierte Mobilfunk-Kleinzelle oder ein mobiler HotSpot vorgesehen sein, die/der einen Mobilfunk-Kommunikatonskanal beansprucht (der hier verwendete Begriff der Mobilfunk-Kleinzelle kann ein einzelnes Gerät oder eine Zelle bezeichnen, wie sie im 3GPP-Standard als "Home eNB" definiert wird, wie beispielsweise eine Mikrozelle, eine Picozelle, eine Femtozelle oder ähnliches; auch sogenannte "Relay Nodes", wie sie im 3GPP-Standard ab Release 10 definiert sind, sollen von dem Begriff umfasst sein). Daher wird üblicherweise einer der simultan etablierbaren Mobilfunk-Kommunikationskanäle für Fahrzeugherstellerspezifische Mobilfunkkommunikation und der andere Mobilfunk-Kommunikationskanal für die Fahrzeugbenutzer-spezifische Mobilfunk-Kommunikation genutzt. Die hierfür verwendeten Identitätsprofile sind in jedem Fall unterschiedlich; sie unterscheiden sich zumindest in ihren Nutzer-spezifischen Datenanteilen, da diese in einem Fall den Fahrzeughersteller identifizieren und im anderen Fall den Fahrzeugbenutzer.

Nachteilig ist, dass die Leistung des Gesamtsystems oft durch die Leistung gemeinsam genutzter Komponenten, wie beispielsweise der Antennen, beschränkt ist, sodass bei mehreren simultan etablierten Mobilfunk-Kommunikationskanälen die Leistung jedes einzelnen Mobilfunk-Kommunikationskanals geschwächt ist. Zudem ist mit der Simultanetablierung mehrerer Mobilfunk-Kommunikationskanäle ein erhöhter Energieverbrauch verbunden.

US 2013/0329639 A1 offenbart ein Anwenderendgerät mit mehreren SIM-Karten, durch welche die Kommunikation in Abhängigkeit unterschiedlicher Umstände wahlweise über die erste SIM-Karte, die zweite SIM-Karte oder beide SIM-Karten abgewickelt werden kann.

### Aufgabenstellung

Es ist die Aufgabe der vorliegenden Erfindung, ein gattungsgemäßes Verfahren derart weiterzubilden, dass Leistung und Energieverbrauch des Systems verbessert werden.

### Darlegung der Erfindung

Diese Aufgabe wird in Verbindung mit den Merkmalen des Oberbegriffs von Anspruch 1 dadurch gelöst, dass während einer Mobilfunk-Kommunikationsabwicklung über zwei simultan etablierte Mobilfunk-Kommunikationskanäle
- die Nutzer-unspezifischen, Mobilfunk-Dienstanbieter-Information enthaltenden Datenanteile der aktuell aktiven Identitätsprofile zur Bestimmung aktuell in Anspruch genommener Mobilfunk-Dienstanbieter miteinander verglichen werden und
- im Fall einer im Rahmen des Vergleichs ermittelten Mobilfunk-Dienstanbieter-Identität einer der Mobilfunk-Kommunikationskanäle abgeschaltet und die Mobilfunk-Kommunikation über den anderen Mobilfunk-Kommunikationskanal abgewickelt wird.

Bevorzugte Ausführungsformen der Erfindung sind Gegenstand der abhängigen Patentansprüche. Die Erfindung sieht in ihrem Kern vor, nach Möglichkeit auf die simultane Etablierung zweier Mobilfunk-Kommunikationskanäle zu verzichten und die Mobilfunk-Kommunikation über einen gemeinsamen Mobilfunk-Kommunikationskanal abzuwickeln. Entscheides Kriterium dafür, ob diese Kanalzusammenlegung möglich ist, ist, ob beide etablierten Mobilfunk-Kommunikationskanäle zum selben Mobilfunk-Dienstanbieter laufen. Diese Information wird aus den Nutzer-unspezifischen Datenanteilen der aktuell aktiven Identitätsprofile extrahiert. Diese umfassen insbesondere eine Länder- und eine Dienstanbieter- bzw. Netz-Kennung, sodass sich eine Dienstanbieter-Identität aus diesen Datenanteilen ermitteln lässt. Die Nutzer-spezifischen Datenanteile sind hierfür nicht zu gebrauchen, da typischerweise einer der simultan etablierten Mobilfunk-Kommunikationskanäle vom Fahrzeughersteller und andere vom Fahrzeugbenutzer genutzt wird. Wird aus den Nutzer-unspezifischen Datenanteilen eine Dienstanbieter-Identität ermittelt, legt das Verfahren die Kommunikation beider Kanäle zusammen und schaltet den frei gewordenen Mobilfunk-Kanal ab. Im Ergebnis steht dann dem einzig genutzten Mobilfunk-Kommunikationskanal die gesamte Systemhardware zur Verfügung; auch die ansonsten von dem nun abgeschalteten Mobilfunk-Kommunikationskanal verbrauchte Energie kann eingespart werden.

Problematisch bei diesem Ansatz ist allerdings, dass die Zuordnung von Dienstanbieter-Kennung (MNC) zu Dienstanbieter nicht immer eineindeutig ist. Zwar ist jeder MNC eindeutig ein Mobilfunk-Dienstleister zugeordnet; umgekehrt gilt dies jedoch nicht, da durchaus Mobilfunk-Dienstanbieter existieren, denen jeweils mehrere MNCs zugewiesen sind. Bei einer Weiterbildung der Erfindung ist daher vorgesehen, dass die Bestimmung der aktuell in Anspruch genommenen Mobilfunk-Dienstanbieter mittels einer in einem Speicher der Steuereinheit hinterlegten Zuordnungsliste erfolgt, in der Nutzer-unspezifischer Datenanteile von Identitätsprofilen gruppenweise unterschiedlichen Mobilfunk-Dienstanbietern zugeordnet sind. Vereinfacht ausgedrückt wird im Speicher eine "Namensliste" der Mobilfunk-Dienstanbieter mit den entsprechenden MNCs hinterlegt, wobei der erfindungsgemäße Vergleich nicht auf MNC-Basis, sondern auf Basis der zugeordneten "Namen" erfolgt. Der Fachmann wird verstehen, dass hier nicht zwingend Klartext-Namen miteinander verglichen werden; andere Arten der Dienstanbieter-Codierung in der Zuordnungsliste sind ebenso möglich.

Um die Anzahl und Komplexität der durchgeführten Vergleiche zu minimieren, ist bei einer bevorzugten Ausführungsform der Erfindung vorgesehen, die Tatsache auszunutzen, dass die Nutzer-unspezifischen Datenanteile der Identitätsprofile typischerweise jeweils einen Länder-spezifischen Datenanteil und einen Dienstanbieter-spezifischen Datenanteil aufweisen. Dies erfolgt, indem in einem ersten Vergleichsschritt die Länder-spezifischen Datenanteile verglichen und nur im Identitätsfall in einem zweiten Vergleichsschritt die Dienstanbieter-spezifischen Datenanteile verglichen werden. Obgleich die meisten Dienstanbieter international agierende Konzerne sind, sind ihre nationalen Sektionen typischerweise wirtschaftlich getrennt. Eine Abweichung in der Länderkennung (MCC) der aktuell aktiven Identitätsprofile schließt daher bereits die Kanalzusammenlegung aus. Eine detaillierte Untersuchung der MNCs erübrigt sich damit. Nur im Fall einer Identität der MCCs lohnt sich die weitere Prüfung auf Identität der MNCs bzw. der für diese hinterlegten Codes in der Zuordnungsliste.

Wie beim Stand der Technik üblich, ist auch im Rahmen der Erfindung bevorzugt vorgesehen, dass über eine erste Mobilfunk-Kommunikationsverbindung Fahrzeugherstellerspezifische Mobilfunk-Dienste von einem oder mehreren ausgewählten Mobilfunk-Dienstanbietern abgerufen werden. Über eine zweite Mobilfunk-Kommunikationsverbindung werden typischerweise Benutzer-spezifische Mobilfunk-Dienste von einem oder mehreren ausgewählten Mobilfunk-Dienstanbietern abgerufen. Diese Mobilfunk-Kommunikationsverbindungen können jeweils über einen eigenen oder, erfindungsgemäß, nach Möglichkeit über einen gemeinsamen Mobilfunk-Kommunikationskanal abgewickelt werden. Tritt der erfindungsgemäß angestrebte Fall der Abwicklung der Mobilfunk-Kommunikation der ersten Mobilfunk-Kommunikationsverbindung und der zweiten Mobilfunk-Kommunikationsverbindung über einen gemeinsamen Mobilfunk-Kommunikationskanal ein, erfolgt bei einer bevorzugten Ausführungsform eine Verbindungs-spezifische Kontenzuordnung der abgerufenen Mobilfunk-Dienste. Dies ist auch unter dem Schlagwort "Dual Billing" bekannt. Danach ist es möglich, Mobilfunk-Dienste, die von einem Mobilfunk-Dienstanbieter über einen Mobilfunk-Kommunikationskanal an unterschiedliche Nutzer gesendeten Dienste Nutzer-spezifisch zuzuordnen und abzurechnen. So kann trotz erfindungsgemäßer Kanalzusammenlegung eine getrennte Abrechnung, über die im Auftrag des Fahrzeugherstellers und im Auftrag des Fahrzeugbenutzers abgerufenen Dienste erfolgen.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1: eine schematische Darstellung eines Kommunikationssystems unter Verwendung des erfindungsgemäßen Verfahrens,
- Figur 2: ein Flussdiagramm einer bevorzugten Ausführungsform.

### Ausführliche Beschreibung bevorzugter Ausführungsformen

Gleiche Bezugszeichen in den Figuren weisen auf gleiche oder analoge Elemente hin.

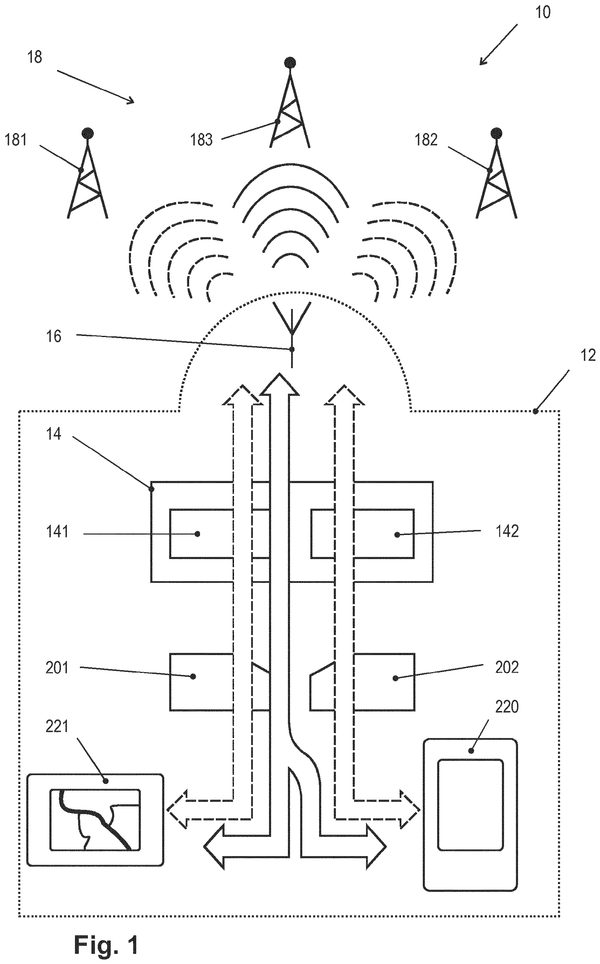

Figur 1 zeigt in grober Schematisierung ein Kommunikationssystem 10, in welchem das erfindungsgemäße Verfahren Anwendung findet. Der punktiert umrahmte Bereich 12 zeigt eine Dienstempfänger-seitige Hardware, beispielsweise das Kommunikationssystem eines nicht näher dargestellten Kraftfahrzeugs sowie zusätzliche Fahrzeugbenutzer-Hardware. Die fahrzeugeigene Hardware umfasst eine Modemeinrichtung 14, die, wie im gezeigten Fall, zwei Einzelmodems 141, 142 aufweist, aber auch als ein Doppelmodem ausgebildet sein kann. Die Modemeinrichtung 14 steht mit einer Antenneneinrichtung 16 des Fahrzeugs in Verbindung und kann über diese eine Mobilfunk-Kommunikation mit einer Provider-seitigen Mobilfunknetz-Hardware 18 aufbauen. Rein symbolisch sind in Figur 1 zwei Mobilfunk-Basisstationen 181, 182 dargestellt, die zum Zwecke der vorliegenden Erläuterung unterschiedlichen Mobilfunk-Netzbetreibern zugeordnet seien. Außerdem ist eine dritte Mobilfunk-Basisstation 183 dargestellt, auf deren Bedeutung weiter unten eingegangen werden soll.

Der Modemeinrichtung 14 vorgelagert ist ein Speicher, in dem mehrere Identitätsprofile 201, 202, gespeichert sind. In Figur 1 sind die Identitätsprofile in Form typischer SIM-Karten dargestellt. Der Fachmann wird jedoch erkennen, dass die eigentlich als spezifische Datenstrukturen mit konkreten Dateneinträgen realisierten Identitätsprofile 201, 202 auch in anderer Weise in Hardware umgesetzt sein können. Insbesondere ist es nicht erforderlich, dass jedem Identitätsprofil eine eigenen Hardware-Element zugeordnet ist; Vielmehr ist es auch möglich, unterschiedliche Identitätsprofile gemeinsam in einem Hardware-Element zu speichern.

Als Beispiel einer fahrzeugseitigen Benutzerschnittstelle des Kommunikationssystems 12 ist in Figur 1 ein Navigationsgerät 221 dargestellt. Als fahrzeug-unabhängige Benutzerhardware ist in Figur 1 ein Smartphone 222 dargestellt. Der Fachmann wird erkennen, dass sowohl fahrzeug- wie benutzereigene Kommunikationshardware hinsichtlich Art und Anzahl grundsätzlich nicht beschränkt ist.

Die fahrzeugeigene Hardware 221 kommuniziert typischerweise unter Verwendung eines ersten Identitätsprofils 201 über das erste Modem 141 mit der Mobilfunk-Netzstruktur 181 eines ersten Mobilfunk-Netzbetreibers, mit dem der Fahrzeughersteller bestimmte vertragliche Verbindungen eingegangen ist, um seinen Kunden einen fahrzeugspezifischen, besonderen Service zu bieten. Auf die Wahl des Mobilfunk-Dienstanbieters bzw. Mobilfunk-Netzbetreibers für die fahrzeugeigene Kommunikation hat der Fahrzeugbenutzer im Wesentlichen keinen Einfluss.

Seine eigene, fahrzeugunabhängige Kommunikationshardware 222 kann der Fahrzeugbenutzer jedoch gemäß eigener Vertragsbindungen nutzen. Dabei verwendet er das zweite Identitätsprofil 202 und kommuniziert typischerweise über das zweite Modem 142 mit der Mobilfunk-Infrastruktur 182 eines zweiten Dienstanbieters bzw. Mobilfunk-Netzbetreibers.

Die beiden genannten Kommunikationswege sind in Figur 1 als gestrichelte Doppelpfeile dargestellt. Es wird deutlich, dass beide Kommunikationswege gemeinsam die Antenneneinrichtung 16 des Fahrzeugs verwenden, was zu Kapazitätskollisionen, insbesondere Interferenzen und Einstreuungen führen kann. Selbstverständlich sind auch Varianten denkbar, bei denen mehrere Antennen verwendet werden. Auch hier können sich bei der simultanen Etablierung mehrerer Kanäle leistungsmindernde Kollisionen ergeben. Das Beispiel der gemeinsamen Verwendung einer Antennen für beide Kanäle wurde insbesondere aus Gründen der Anschaulichkeit gewählt.

Gemäß dem weiter unten im Detail eines Ausführungsbeispiels erläuterten, erfindungsgemäßen Verfahren ist es jedoch möglich, im Fall, dass beide Kommunikationswege zum selben Ziel, d.h. zum selben Mobilfunk-Dienstanbieter bzw. Mobilfunk-Netzbetreiber führen, diese aufgrund eines Vergleichs der Identitätsprofile 201, 202, insbesondere eines Vergleichs ihrer Nutzer-unabhängigen Datenanteile, zusammenzulegen und über nur Modem, in Figur das erste Modem 141, zu betreiben. Dieser Kommunikationspfad führt in Figur 1 zur Mobilfunk-Infrastruktur 183, die nicht zwingend von den Mobilfunk-Infrastrukturen 181, 182 verschieden sein muss, sondern eine von diesen sein kann.

Die Antenneneinrichtung 16 wird daher lediglich von einem Modem 141 genutzt, sodass insgesamt mit einer besseren Kommunikations-Performance zu rechnen ist. Außerdem kann der Energiebedarf für das zweite Modem 142 in diesem Modus eingespart werden.

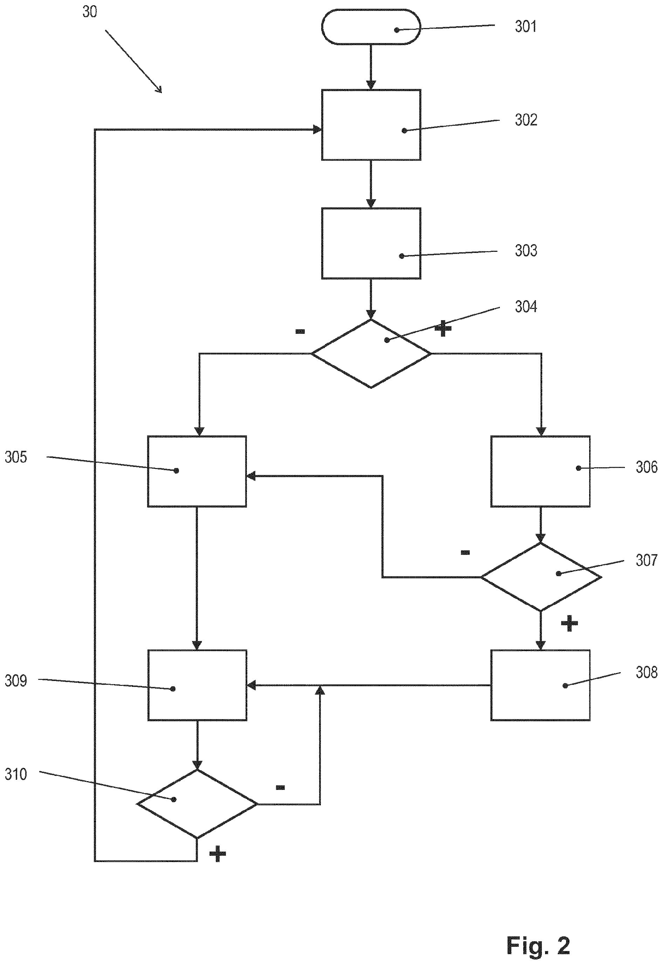

Figur 2 zeigt ein Flussdiagramm 30, welches in seinem Startschritt 301 von zwei aktivierten Identitätsprofilen 141, 142 ausgeht. Im Verfahrensschritt 302 werden die Identitätsprofile, insbesondere die IMSIs, von der das Verfahren durchführenden Steuereinheit gelesen. Im Anschluss werden Teile der benutzterunabhängigen Datenanteile der Identitätsprofile, insbesondere der IMSIs, verglichen. Bei der bevorzugten Ausführungsform, bei der die IMSIs je eine MNC, d.h. eine Länderkennung aufweisen, werden zunächst diese in Schritt 303 miteinander verglichen. Führt der Vergleich im Entscheidungsschritt 304 zu einer Ungleichheit der Länderkennungen, erfolgt im Schritt 305 keine Änderung der Kommunikationskanäle, insbesondere erfolgt die Kommunikation weiter über zwei aktive Identitätsprofile.

Führt der Vergleich im Entscheidungsschritt 304 jedoch zu einer Identität der Länderkennungen, folgt ein weiterer Vergleichsschritt 306. Hier wird ein weiterer Teil des Nutzer-unabhängigen Datenanteils der Identitätsprofile geprüft, nämlich die Mobilfunk-Netzbetreiberkennung MNC. Allerdings erfolgt bei einer bevorzugten Ausführungsform der Erfindung kein reiner Vergleich der MNCs der auf den beiden Kommunikationswegen aktiven Identitätsprofile. Einige Mobilfunk-Netzbetreibergesellschaften haben nämlich in einigen Ländern mehrere MNCs, die ihnen zugeordnet sind. Daher wird im Vergleichsschritt 306 eine Vorzugsweise im Speicher der Steuereinheit hinterlegte, vorzugsweise dynamisch aktualisierbare Tabelle zu Rate gezogen, in der die MNCs im jeweiligen Land samt dem zugehörigen Betreibernamen hinterlegt sind. Der Vergleich in Schritt 306 erfolgt auf Basis des Betreibernamens.

Wird im Entscheidungsschritt 307 festgestellt, dass die Mobilfunk-Betreiber auf beiden aktiven Kommunikationswegen unterschiedlich sind, erfolgt keine Änderung der aktuellen Kommunikation und das Verfahren setzt sich fort mit dem oben beschriebenen Schritt 305. Wird in Schritt 307 jedoch eine Betreiberidentität festgestellt, wird in Schritt 308 einer der Kommunikationswege abgeschaltet und die gesamte Kommunikation läuft nur noch über ein Identitätsprofil und entsprechend nur ein Modem.

In Schritt 309 werden die Verfahrenszweige aus Schritt 305 und Schritt 308 zusammengeführt, wobei Schritt 309 lediglich einen Warteschritt darstellt, der auf eine Änderung der aktiven Profilkonstellation wartet, sei es, dass eines der gemäß Schritt 305 aktiven zwei Profile sich ändert, oder sei es, dass neben dem gemäß Schritt 308 einzigen aktiven Profil ein weiteres Profil aktiviert wird. Eine derartige Änderung der Profilkonstellation kann sich beispielsweise im Rahmen eines Wechsels eines Mobilfunkanbieters durch den Benutzer ergeben. Solange kein Profilwechsel detektiert wird, führt der Entscheidungschritt 310 zu einer Schleife mit dem Warteschritt 309. Wird ein Profilwechsel detektiert, führt der Entscheidungsschritt 310 zurück zum oben bereits erläuterten Schritt 302.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Kommunikationssystem
- 12: Dienstempfänger-seitige Kommunikations-Hardware
- 14: Modemeinrichtung
- 141: erster Modem
- 142: zweites Modem
- 16: Antenneneinrichtung
- 18: Mobilfunk-Netzinfrastruktur
- 181: Basisstation
- 182: Basisstation
- 183: Basisstation
- 201: erstes Identitätsprofil
- 202: zweites Identitätsprofil
- 221: fahrzeugeigene Kommunikations-Hardware
- 222: benutzereigene Kommunikations-Hardware
- 30: Flussdiagramm
- 301: Startschritt
- 302: Leseschritt
- 303: Vergleichsschritt
- 304: Entscheidungsschritt
- 305: Fortsetzungsschritt
- 306: Vergleichsschritt
- 307: Entscheidungsschritt
- 308: Umschaltschritt
- 309: Warteschritt
- 310: Entscheidungsschritt

## Patentansprüche

1. Verfahren zur Ressourcen-Verwaltung in einer fahrzeugbasierten Mobilfunkeinrichtung, in deren Speicher eine Mehrzahl aktivierbarer Identitätsprofile (201, 202), jeweils umfassend einen Nutzer-spezifischen und einen Nutzer-unspezifischen Datenanteil, hinterlegt sind und die eine Modemeinrichtung (14) aufweist, mittels derer unter Verwendung je eines Identitätsprofils (201, 202) zwei simultane Mobilfunk-Kommunikationskanäle zu Mobilfunk-Netzen (18) von zur Bereitstellung von Mobilfunk-Diensten in Anspruch nehmbaren Mobilfunk-Dienstanbietern etablierbar sind, wobei die Durchführung des Verfahrens automatisiert von einer Steuereinheit der Mobilfunkeinrichtung durchgeführt wird,
**dadurch gekennzeichnet, dass**
während einer Mobilfunk-Kommunikationsabwickluhg über zwei simultan etablierte Mobilfunk-Kommunikationskanäle
- die Nutzer-unspezifischen, Mobilfunk-Dienstanbieter-Information enthaltenden Datenanteile der aktuell aktiven Identitätsprofile (201, 202) zur Bestimmung aktuell in Anspruch genommener Mobilfunk-Dienstanbieter miteinander verglichen werden und
- im Fall einer im Rahmen des Vergleichs ermittelten Mobilfunk-Dienstanbieter-Identität einer der Mobilfunk-Kommunikationskanäle abgeschaltet und die Mobilfunk-Kommunikation über den anderen Mobilfunk-Kommunikationskanal abgewickelt wird.

2. Verfahren nach Anspruch 1,
**dadurch gekennzeichnet,**
**dass** die Bestimmung der aktuell in Anspruch genommenen Mobilfunk-Dienstanbieter mittels einer in einem Speicher der Steuereinheit hinterlegten Zuordnungsliste erfolgt, in der eine Mehrzahl Nutzer-unspezifischer Datenanteile von Identitätsprofilen (201, 202) gruppenweise unterschiedlichen Mobilfunk-Dienstanbietern zugeordnet sind.

3. Verfahren nach einem der vorangehenden Ansprüche,
**dadurch gekennzeichnet,**
**dass** die Nutzer-unspezifischen Datenanteile der Identitätsprofile (201, 202) jeweils einen Länder-spezifischen Datenanteil und einen Dienstanbieter-spezifischen Datenanteil aufweisen, wobei in einem ersten Vergleichsschritt (306) die Länder-spezifischen Datenanteile verglichen und nur im Identitätsfall in einem zweiten Vergleichsschritt (306) die Dienstanbieter-spezifische Datenanteile verglichen werden.

4. Verfahren nach einem der vorangehenden Ansprüche,
**dadurch gekennzeichnet,**
**dass** die Modemeinrichtung (14) mehrere Einzelmodems (141, 142) umfasst, mittels derer jeweils ein Mobilfunk-Kanal etablierbar ist.

5. Verfahren nach einem der Ansprüche 1 bis 3,
**dadurch gekennzeichnet,**
**dass** die Modemeinrichtung (14) ein Mehrkanalmodem aufweist, mittels dessen simultan mehrere Mobilfunk-Kanäle etablierbar sind.

6. Verfahren nach einem der vorangehenden Ansprüche,
dass über eine erste Mobilfunk-Kommunikationsverbindung Fahrzeugherstellerspezifische Mobilfunkdienste von einem oder mehreren ausgewählten Mobilfunk-Dienstanbietern abgerufen werden.

7. Verfahren nach einem der vorangehenden Ansprüche,
**dadurch gekennzeichnet,**
**dass** über eine zweite Mobilfunk-Kommunikationsverbindung Fahrzeugbenutzer-spezifische Mobilfunk-Dienste von einem oder mehreren ausgewählten Mobilfunk-Dienstanbietern abgerufen werden.

8. Verfahren nach einem der Ansprüche 6 und 7,
**dadurch gekennzeichnet,**
**dass** im Fall der Abwicklung der Mobilfunk-Kommunikation der ersten Mobilfunk-Kommunikationsverbindung und der zweiten Mobilfunk-Kommunikationsverbindung über einen gemeinsamen Mobilfunk-Kommunikationskanal, eine Verbindungs-spezifische Kontenzuordnung der abgerufenen Mobilfunk-Dienste erfolgt.

## Claims

1. Method for resource management in a vehicle-based mobile communications unit, the memory of which stores a plurality of activatable identity profiles (201, 202) each comprising a user-specific and a user-non-specific data component, and which has a modem device (14) which can be used to establish, using a respective identity profile (201, 202), two simultaneous mobile communications channels to mobile communications networks (18) belonging to mobile communications service providers which can be used to provide mobile communications services, the method being carried out in an automated manner by a control unit of the mobile communications unit,
**characterized in that**
while carrying out mobile communication via two simultaneously established mobile communications channels,
- the user-non-specific data components, containing mobile communications service provider information, of the currently active identity profiles (201, 202) are compared with one another in order to determine currently used mobile communications service providers, and
- in the case of mobile communications service provider identity determined during the comparison, one of the mobile communications channels is switched off and mobile communication is carried out via the other mobile communications channel.

2. Method according to Claim 1,
**characterized**
**in that** the currently used mobile communications service providers are determined using an assignment list which is stored in a memory of the control unit and in which a plurality of user-non-specific data components of identity profiles (201, 202) are assigned in groups to different mobile communications service providers.

3. Method according to one of the preceding claims,
**characterized**
**in that** the user-non-specific data components of the identity profiles (201, 202) each have a country-specific data component and a service-provider-specific data component, the country-specific data components being compared in a first comparison step (306) and the service-provider-specific data components being compared in a second comparison step (306) only in the event of identity.

4. Method according to one of the preceding claims,
**characterized**
**in that** the modem device (14) comprises a plurality of individual modems (141, 142) which can each be used to establish a mobile communications channel.

5. Method according to one of Claims 1 to 3,
**characterized**
**in that** the modem device (14) has a multichannel modem which can be used to simultaneously establish a plurality of mobile communications channels.

6. Method according to one of the preceding claims,
**characterized**
**in that** vehicle-manufacturer-specific mobile communications services are retrieved from one or more selected mobile communications service providers via a first mobile communications connection.

7. Method according to one of the preceding claims,
**characterized**
**in that** vehicle-user-specific mobile communications services are retrieved from one or more selected mobile communications service providers via a second mobile communications connection.

8. Method according to either of Claims 6 and 7,
**characterized**
**in that**, if the mobile communication of the first mobile communications connection and of the second mobile communications connection is carried out via a common mobile communications channel, connection-specific account assignment of the retrieved mobile communications services is carried out.

## Revendications

1. Procédé de gestion de ressources dans un dispositif de téléphonie mobile basé sur véhicule dans la mémoire duquel est enregistrée une pluralité de profils d'identité (201, 202) pouvant être activés, comprenant respectivement une partie de données spécifique à un utilisateur et une partie de données non spécifique à un utilisateur, et qui présente un dispositif modem (14) au moyen duquel, en utilisant respectivement un profil d'identité (201, 202), deux canaux de communication de téléphonie mobile simultanés peuvent être établis avec des réseaux de téléphonie mobile (18) de fournisseurs de services de téléphonie mobile auxquels on peut faire appel pour la fourniture de services de téléphonie mobile, l'exécution du procédé étant effectuée de manière automatisée par une unité de commande du dispositif de téléphonie mobile, **caractérisé en ce que** pendant un traitement de communication de téléphonie mobile sur deux canaux de communication de téléphonie mobile établis simultanément,
- les parties de données contenant des informations de fournisseurs de services de téléphonie mobile, non spécifiques à un utilisateur, des profils d'identité (201, 202) actuellement actifs sont comparées les unes aux autres pour déterminer des fournisseurs de services de téléphonie mobile auxquels il est fait appel actuellement, et
- si une identité de fournisseur de services de téléphonie mobile est établie dans le cadre de la comparaison, l'un des canaux de communication de téléphonie mobile est coupé et la communication de téléphonie mobile est traitée par l'intermédiaire de l'autre canal de communication de téléphonie mobile.

2. Procédé selon la revendication 1, **caractérisé en ce que** la détermination des fournisseurs de services de téléphonie mobile auxquels il est fait appel actuellement est effectuée au moyen d'une liste d'association enregistrée dans une mémoire de l'unité de commande, liste dans laquelle une pluralité de parties de données non spécifiques à un utilisateur de profils d'identité (201, 202) est associée par groupes à différents fournisseurs de services de téléphonie mobile.

3. Procédé selon l'une quelconque des revendications précédentes, **caractérisé en ce que** les parties de données non spécifiques à un utilisateur des profils d'identité (201, 202) présentent respectivement une partie de données spécifique à un pays et une partie de données spécifique à un fournisseur de services, dans lequel, dans une première étape de comparaison (306), les parties de données spécifiques à un pays sont comparées, et dans une deuxième étape de comparaison (306), les parties de données spécifiques à un fournisseur de services ne sont comparées que dans un cas d'identité.

4. Procédé selon l'une quelconque des revendications précédentes, **caractérisé en ce que** le dispositif modem (14) comprend plusieurs modems individuels (141, 142) au moyen desquels respectivement un canal de téléphonie mobile peut être établi.

5. Procédé selon l'une quelconque des revendications 1 à 3, **caractérisé en ce que** le dispositif modem (14) présente un modem multicanal au moyen duquel plusieurs canaux de téléphonie mobile peuvent être établis simultanément.

6. Procédé selon l'une quelconque des revendications précédentes, **caractérisé en ce que** par une première liaison de communication de téléphonie mobile, des services de téléphonie mobile spécifiques à un fabricant de véhicule sont récupérés chez un ou plusieurs fournisseurs de services de téléphonie mobile sélectionnés.

7. Procédé selon l'une quelconque des revendications précédentes, **caractérisé en ce que** par une deuxième liaison de communication de téléphonie mobile, des services de téléphonie mobile spécifiques à un utilisateur de véhicule peuvent être récupérés chez un ou plusieurs fournisseurs de services de téléphonie mobile sélectionnés.

8. Procédé selon l'une quelconque des revendications 6 et 7, **caractérisé en ce que** dans le cas du traitement de la communication de téléphonie mobile de la première liaison de communication de téléphonie mobile et de la deuxième liaison de communication de téléphonie mobile par un canal de communication de téléphonie mobile commun, une association de comptes spécifique à une liaison des services de téléphonie mobile récupérés est effectuée.
